# FASCICULE DE BREVET EUROPEEN

(11) **EP 2 748 259 B1**
(45) Date de publication et mention de la délivrance du brevet: **02.01.2019**
(21) Numéro de dépôt: 12750361.3
(22) Date de dépôt: 20.08.2012
(51) Int. Cl.: C08L 77/00, C08L 77/06, C08L 67/00, C08L 67/02, C08K 3/00, C08K 3/02, C08K 5/00, C08K 7/14

(54) **COMPOSITION IGNIFUGEE D'UN ALLIAGE DE RÉSINES DE POLYAMIDE ET DE POLYESTER**
FLAMMHEMMENDE ZUSAMMENSETZUNG AUS EINEM POLYAMID UND EINER POLYESTERHARZLEGIERUNG
FLAME-RETARDANT COMPOSITION OF A POLYAMIDE AND POLYESTER RESIN ALLOY

(30) Priorité: 26.08.2011 FR 1157554
(43) Date de publication de la demande: 02.07.2014
(73) Titulaire: RHODIA OPERATIONS, 93306 Aubervilliers (FR)
(72) Inventeur: LIM, Mok-Keun, Seoul 423-010 (KR)
(74) Mandataire: Schuck, Alexander
(86) Numéro de dépôt international: PCT/EP2012/066181
(87) Numéro de publication internationale: WO 2013/030024

(56) Documents cités:
- EP-A1- 0 837 100
- EP-A2- 2 003 158
- WO-A1-97/23565
- WO-A1-2010/146143
- US-A1- 2001 007 888
- US-B1- 6 344 158

## Description

La présente invention concerne une composition comprenant au moins une résine de polyamide thermoplastique, une résine de polyester thermoplastique, une charge de renfort ou de remplissage, et un agent ignifugeant. Ladite composition ne comprend pas un agent compatibilisant du polyamide et du polyester, tel qu'un agent de type polymérique, notamment pas de résine epoxy. Une telle composition polyamide/polyester ignifugée présente une bonne compatibilité et de bonnes propriétés mécaniques et d'ignifugation, notamment une bonne capacité à ne pas former des flammes en présence des agents incandescents, par exemple dans le domaine de l'électroménager, de l'électrique et de l'électronique.

### ART ANTERIEUR

La résine de polyamide possède de bonnes propriétés mécaniques, chimiques, et thermiques et est donc utilisée dans de nombreux domaines. Toutefois, une résine de polyamide possède une faible stabilité dimensionnelle et les propriétés mécaniques de la résine de polyamide diminuent avec l'absorption d'eau. En conséquence, une tentative a été réalisée pour améliorer les propriétés de la résine de polyamide en mélangeant à l'état fondu la résine de polyamide avec une autre résine thermoplastique telle qu'une résine polyester pour former un mélange à l'état fondu. Toutefois, étant donné qu'une résine de polyamide thermoplastique montre une faible compatibilité avec une résine de polyester thermoplastique, un mélange formé de seulement les deux résines présente une aptitude au traitement et des propriétés qui sont faibles.

Il est connu du brevet US n° 4 150 674 l'utilisation d'un terpolymère de lactame comme agent de compatibilité lors du mélange d'une résine de polyamide avec une résine de polyester et l'utilisation du produit ainsi obtenu pour des tissus. En outre, le brevet US n° 5 055 509 décrit l'introduction d'azoture d'arylphosphonyle comme agent de compatibilité. Toutefois, les effets de la mise en compatibilité de ces composés n'ont pas été clairement vérifiés et les produits ainsi obtenus ne donnent pas les propriétés recherchées.

Le brevet US n° 5 296 550, le brevet US n° 5 475 058, et les demandes EP 664 320 et EP 984 087 décrivent une composition qui améliore la compatibilité entre les deux résines par l'ajout d'une résine oléfinique obtenue par copolymérisation par greffage d'un monomère de type éthylène, par exemple, du styrène ou du méthacrylate, avec un monomère qui possède un groupe glycidyle, par exemple du méthacrylate de glycidyle. Toutefois, cette composition présente des désavantages tels qu'une rigidité réduite comparativement aux résines de polyamide ou de polyester elles-mêmes.

C.C. Huang et al., Polymer, 1997, 38(7), 2135-2141 et C. C. Huang et al., Polymer, 1997, 38(17), 4287-4293, décrivent des mélanges de poly(butylène téréphtalate) et de polyamide-6,6 qui font appel à une résine époxy de type bisphénol-A à l'état solide ayant un poids équivalent d'époxy (EEW) de 2 060 g/éq. J. An et al., Journal of Applied Polymer Science, 1996, 60, 1803-1810, décrit des alliages de PBT et de PA-6 (polyamide-6) avec diverses quantités de résine époxy E-44 (EEW = 210 g/éq). K. C. Chiou et al, Journal of Applied Polymer Science: Part B: Polymer Physics, 2000, 38, 23-33, fait appel à une résine époxy multifonctionnelle (EEW = 110 à 130 g/éq) comme agent de couplage pour rendre compatible des mélanges PA 6/PBT. Toutefois, dans le cas de l'utilisation d'une résine époxy d'un faible poids équivalent d'époxy dans des mélanges de polymères, l'aptitude au traitement et les propriétés des mélanges de polymères sont encore insatisfaisantes et doivent être améliorées.

WO 97/23565 A1 divulgue une composition contenant (1) de 30 à 70 % en poids d'un polyester, d'un polyamide synthétique, aliphatique ou d'un mélange de ceux-ci, (2) de 15 à 40 % en poids d'une charge de remplissage et (3) d'un agent ignifugeant choisi dans le groupe constitué par plusieurs mélanges contenant de la mélamine phosphate ou de la mélamine polyphosphate.

EP 0 837 100 A1 divulgue une composition de résine ignifuge qui renferme :
(a1) 100 parts en poids d'une résine thermoplastique, qui est choisie entre un polyester cristal non liquide autre que l'homopolymère du polyéthylène téréphthalate et les copolymères de l'éthylène téréphthalate, une résine polyamide et une résine à base de styrène,
(a2) 0,01 à 50 parts en poids d'homopolymère du polyéthylène téréphthalate, d'un copolymère de l'éthylène téréphthalate ou des deux et (C) 0,1 à 30 parts en poids de phosphore rouge.

EP 2 003 158 B1 divulgue une composition de résine thermoplastique comprenant un polyester hyper-ramifié et une résine thermoplastique choisie parmi le polyamide et le polyester. La composition peut comprendre un modificateur de résistance aux chocs, une charge inorganique et un agent ignifugeant.

US 2001/007888 A1 décrit une composition de résine ignifuge comprenant : 100 parties en poids d'une résine thermoplastique (A) comprenant : de 80 à 10 % en poids de (A-1) au moins une résine polyester aromatique et une résine polyamide, 17 à 85 % en poids d'au moins un copolymère contenant un caoutchouc contenant un cyanure de vinyle et un vinyle aromatique (A-2) et un copolymère d'un cyanure de vinyle et d'un vinyle aromatique (A-3) et de 3 à 40 % en poids de (A-4) au moins l'une parmi une résine polyphénylène éther et une résine polyphénylène sulfide, 1 à 60 parties en poids d'un ignifugeant organique non halogène (B) et 100 parties en poids ou moins d'une charge (C).

US 6,344,158 B1 concerne une combinaison ignifugeante pour polymères thermoplastiques comprenant, comme composant A, un sel d'oxydes de 1-hydroxydihydrophosphole de formule (Ia) ou de formule (Ib) et / ou des oxydes de 1-hydroxyphospholane de formule (II), et, comme le composant B, un composé inorganique synthétique et / ou un produit minéral.

On recherche par ailleurs, des formulations notamment pour le domaine de l'électrique et de l'électronique capables de ne pas former de flammes lorsqu'elles sont mises en présence d'objet incandescent à proximité ; cette propriété étant différente des propriétés classiques d'ignifugations mesurées par les tests UL-94. Or, il vient d'être mis en évidence que la présence d'un agent comptabilisant entre le polyamide et le polyester, telle que la résine epoxy, est néfaste pour cette propriété à ne pas former de flammes.

Il existe ainsi un besoin de mettre au point des formulations polyamide/polyester ignifugées présentant une bonne compatibilité et de bonnes propriétés mécaniques et d'ignifugation, notamment une bonne capacité à ne pas former des flammes en présence des agents incandescents, par exemple dans le domaine de l'électroménager, de l'électrique et de l'électronique.

### INVENTION

La demanderesse vient de mettre au point une formulation comprenant du polyamide et du polyester, des agents ignifugeants et des charges de renfort ou de remplissage et présentant tous les avantages mentionnés précédemment.

La présente invention concerne une composition comprenant au moins :
(a) de 40 à 70 % en poids par rapport au poids total de la composition d'une résine de polyamide thermoplastique ;
(b) de 5 à 40 % en poids par rapport au potids total de la composition d'une résine de polyester thermoplastique ;
(c) de 15 à 50 % en poids au rapport au poids total de la composition d'une charge de renfort ou de remplissage ; et
(d) de 1 à 20 % en poids par rapport au poids total de la composition d'un agent ignifugeant,
(e) de 0,1 à 30 % en poids par rapport au poids de la composition d'un agent modificant la resistance aux chocs,
la composition ne comprenant pas un agent compatibilisant du polyamide et du polyester, tel qu'un agent de type polymérique et organique, notamment pas de résine epoxy.
La composition selon la présente invention ne comprend ainsi pas un agent compatibilisant du polyamide et du polyester classiquement utilisé à cet effet tel que les composés déjà décrit précédemment, notamment les résines époxy comprenant classiquement au moins deux groupes époxy par molécule. Uniquement à titre d'information, ces résine epoxy sont généralement les résines de type DGEBA (éther diglycidylique de bisphénol A), de type DGEBF (éther diglycidylique de bisphénol F), ou de type BPA hydrogéné (bisphénol A hydrogéné), par exemple.

### (a) Résine de polyamide

La résine de polyamide incluse dans la composition de la présente invention peut être toute résine de polyamide thermoplastique. Des exemples d'une résine de polyamide peuvent comprendre un polyamide-6 qui peut être obtenu comme des produits de polymérisation par ouverture de cycle de lactames tels que la ε-caprolactame et la ω-dodécalactame ; des polymères de polyamide qui peuvent être obtenus à partir d'acides aminés tels que l'acide aminocaproïque, l'acide 11-aminoundécanoïque et l'acide 12-aminododécanoïque ; des diamines aliphatiques, cycloaliphatiques ou aromatiques telles l'éthylènediamine, la tétraméthylènediamine, l'hexaméthylènediamine, l'undécaméthylènediamine, la dodécaméthylènediamine, la 2,2,4-triméthylhexaméthylènediamine, la 2,4,4-triméthylhexaméthylènediamine, la 5-méthylnonahexaméthylènediamine, la m-xylènediamine, la p-xylènediamine, le 1,3-bis-aminométhylcyclohexane, le 1,4-bisaminométhylcyclohexane, le 1-amino-3-aminométhyl-3,5,5-triméthylcyclohexane, le bis(4-aminocyclohexane)méthane, le bis(4-méthyl-4-aminocyclohexyl)méthane, le 2,2-bis(4-aminocyclohexyl)propane, la bis(aminopropyl)pipérazine, l'aminoéthylpipéridine, des polymères de polyamide qui peuvent être obtenus à partir d'acides dicarboxyliques aliphatiques, cycloaliphatiques ou aromatiques tels que l'acide adipique, l'acide sébacique, l'acide azélaïque, l'acide dodécanedioïque, l'acide téréphtalique, l'acide isophtalique, l'acide 2-chlorotéréphtalique, l'acide 2-méthyltéréphtalique et l'acide 5-méthylisophtalique ; et des copolymères des résines de polyamide, et celles-ci peuvent être utilisées seules ou en association de deux ou plusieurs types.

Dans certains modes de réalisation, des exemples de la résine de polyamide peuvent comprendre le polyamide-6, le polyamide-66, le polyamide-610, le polyamide-11, le polyamide-12, le polytéréphtalamide, le polyisophtalamide, et les polyaramides.

La matrice polyamide peut notamment être un polymère comprenant des chaînes macromoléculaires étoiles ou H branché, ramifié, hyperramifié, et le cas échéant des chaînes macromoléculaires linéaires. Les polymères comprenant de telles chaînes macromoléculaires étoiles ou H sont par exemple décrits dans les documents FR2743077, FR2779730, US5959069, EP0682057 et EP0832149. Selon une autre variante particulière de l'invention, la matrice polyamide de l'invention peut être un polymère de type arbre statistique, de préférence un copolyamide présentant une structure arbre statistique. Ces copolyamides de structure arbre statistique ainsi que leur procédé d'obtention sont notamment décrits dans le document WO99/03909. La matrice de l'invention peut également être une composition comprenant un polymère thermoplastique linéaire et un polymère thermoplastique étoile, H et/ou arbre tels que décrits ci-dessus. La matrice de l'invention peut également comprendre un copolyamide hyperbranché du type de ceux décrits dans le document WO 00/68298. La composition de l'invention peut également comprendre toute combinaison de polymère thermoplastique linéaire, étoile, H, arbre, copolyamide hyperbranché tel que décrit ci-dessus.

Dans un mode de réalisation, la viscosité relative de la résine de polyamide peut varier de 2,0 à 3,7 (une solution de 1 g de polymère dans 100 ml d'acide formique 90 %, mesurée à 25 °C). Dans un autre mode de réalisation, la masse moléculaire moyenne en nombre de la résine de polyamide peut varier d'environ 5 000 à 70 000.

La résine de polyamide est incluse en une quantité de 40 à 70 % en poids par rapport au poids total de la composition.

La proportion en poids de polyamide dans la composition est préférentiellement plus importante que la proportion en poids de polyester dans ladite composition.

### (b) Résine de polyester

La résine de polyester comprise dans la composition de la présente invention peut être un composé polymère qui possède des liaisons ester dans son squelette. Des exemples de la résine polyester peuvent comprendre un homopolymère ou un copolymère qui peut être obtenu par condensation d'un acide dicarboxylique, ou de ses dérivés pouvant former un ester, avec un diol ou de ses dérivés pouvant former un ester, ou un mélange de ceux-ci.

Dans un mode de réalisation, un exemple d'acide dicarboxylique peut comprendre un acide dicarboxylique aromatique tel que l'acide téréphtalique, l'acide isophtalique, l'acide phtalique, l'acide dicarboxylique de 1,4-, de 1,5-, de 2,6- ou de 2,7-naphtalène, le bis(p-carboxyphényl)méthane, l'acide dicarboxylique d'anthracène, l'acide carboxylique de 4,4'-diphényl éther, l'acide 5-sodiumsulfoisophtalique ; un acide dicarboxylique aliphatique tel l'acide adipique, l'acide sébacique, l'acide azélaïque, l'acide dodécanedioïque ; un acide dicarboxylique cycloaliphatique tel que l'acide dicarboxylique de 1,3-cyclohexane, l'acide dicarboxylique de 1,4-cyclohexane ; et leurs dérivés pouvant former un ester, mais sans que ce soit limité à ceux-ci. Dans certains modes de réalisation, ledit acide dicarboxylique peut être utilisé sous la forme d'un dérivé pouvant former un ester tel qu'un dérivé substitué par un alkylalcoxy, ou un halogène, et un ester obtenu à partir d'un alcool inférieur, par ex., l'ester diméthylique.

Dans un autre mode de réalisation, des exemples desdits diols peuvent comprendre un glycol aliphatique avec de 2 à 20 atomes de carbone tels que l'éthylène glycol, le propylène glycol, le 1,4-butanediol, le néopentyle glycol, le 1,5-pentanediol, le 1,6-hexanediol, le décaméthylène glycol, le cyclohexanediméthanol, le cyclohexanediol ; un glycol à longue chaîne avec un poids moléculaire de 400 à 6 000 tel que le polyéthylène glycol, le poly-1,3-propylène glycol, le polytétraméthylène glycol ; et leurs dérivés pouvant former un ester, mais sans que ce soit limité à ceux-ci. Dans certains modes de réalisation, lesdits diols peuvent être utilisés sous la forme de leurs dérivés pouvant former un ester tels qu'un dérivé substitué par un groupe alkyle, alcoxy ou un halogène.

Dans un certain mode de réalisation, des exemples de l'homopolymère ou copolymère de ceux-ci peuvent comprendre du téréphtalate de polybutylène, polybutylène (téréphtalate/isophtalate), polybutylène (téréphtalate/adipate), polybutylène (téréphtalate/sébacate), polybutylène (téréphtalate/décanedicarboxylate), naphtalate de polybutylène, téréphtalate de polyéthylène, polyéthylène (téréphtalate/isophtalate), polyéthylène (téréphtalate/adipate), polyéthylène (téréphtalate/5-sodiumsulfoisophtalate), polybutylène (téréphtalate/5-sodiumsulfoisophtalate), téréphtalate de polypropylène, naphtalate de polyéthylène, téréphtalate de polycyclohexanediméthylène, mais sans que ce soit limité à ceux-ci.

Dans un autre mode de réalisation, des exemples de la résine de polyester autres que les composés ci-dessus peuvent comprendre une résine de polyester copolymérisée avec un monomère copolymérisable, par ex., un acide hydroxycarboxylique tel que l'acide glycolique, l'acide hydroxybenzoïque, l'acide hydroxyphénylacétique, l'acide naphtylglycolique ; et un composé de lactone tel la propriolactone, la butyrolactone, la caprolactone, la valérolactone. Dans encore un autre mode de réalisation, des exemples de la résine de polyester peuvent comprendre une résine de polyester dérivée de composés formant un ester multifonctionnel tels que le triméthylolpropane, le triméthyloléthane, le pentaérythritol, l'acide trimellitique, l'acide trimésique, l'acide pyromellitique ou une résine de polyester ayant une structure ramifiée ou réticulée en une quantité à laquelle la résine de polyester maintient une thermoplasticité.

La résine de polyester est incluse en une quantité de 5 à 40 % en poids par rapport au poids total de la composition.

La résine polyester peut notamment être un polyester recyclé provenant notamment d'articles en fin de vie ou de déchets de production. Ces polyesters peuvent provenir d'articles textiles, de bouteilles, de films ou de plastiques techniques, notamment les composites. Les polyesters peuvent être utilisés directement ou après un ou plusieurs traitements possibles, notamment d'hydrolyses ou visant a séparer les charges et additifs des compositions polyesters. Les déchets peuvent être par exemple cassés ou broyés sous forme de fragments, de poudres ou de granulés.

Il est possible selon l'invention d'utiliser dans la composition un mélange de polyester et de polyester recyclé.

### (c) Charges de renfort ou de remplissage

La composition peut comprendre des charges fibreuses et/ou non fibreuses.

Comme charges fibreuses, on peut citer les fibres de verre, les fibres de carbone, les fibres naturelles, les fibres d'aramides, et les nanotubes, notamment de carbone. On peut citer comme fibres naturelles le chanvre et le lin. Parmi les charges non fibreuses on peut notamment citer toutes les charges particulaires, lamellaires et/ou les nanocharges exfoliables ou non exfoliables comme l'alumine, le noir de carbone, les argiles alumino-silicates, les montmorillonites, le phosphate de zirconium, le kaolin, le carbonate de calcium, les diatomées, le graphite, le mica, la silice, le dioxyde de titane, les zéolites, le talc, la wollastonite, les charges polymériques telles que, par exemple, des particules de diméthacrylates, les billes de verre ou de la poudre de verre.

Il est parfaitement possible selon l'invention que la composition comprenne plusieurs types de charges de renfort. De façon préférentielle, la charge la plus utilisée peut être les fibres de verres, du type dit coupé (chopped), notamment ayant un diamètre compris entre 7 et 14 µm. Ces charges peuvent présenter un ensimage surfacique qui assure l'adhésion mécanique entre les fibres et la matrice polyamide.

La concentration pondérale des charges de renfort ou de remplissage est comprise entre 15 % et 50 % en poids par rapport au poids total de la composition.

### (d) Agent ignifugeant

La composition selon la présente invention peut notamment comprendre des agents ignifugeants généralement utilisés dans le domaine du polyamide ; c'est à dire des composés permettant de diminuer la propagation de la flamme et/ou ayant des propriétés d'ignifugation, bien connus de l'homme du métier. Ces agents ignifugeants sont habituellement utilisés dans des compositions ignifugées et sont notamment décrits, par exemple, dans les brevets US6344158, US6365071, US6211402 et US6255371.

Avantageusement, la composition comprend au moins un agent ignifugeant choisi parmi le groupe comprenant :
* les agents ignifugeants contenant du phosphore, tels que :
   - les oxydes de phosphines comme par exemple l'oxyde de triphénylphosphine, l'oxyde de tri-(3-hydroxypropyl) phosphine et l'oxyde de tri-(3-hydroxy-2-méthylpropyl) phosphine.
   - les acides phosphoniques ou leurs sels ou les acides phosphiniques ou leurs sels, tels que par exemple les sels d'acides phosphiniques de zinc, de magnésium, de calcium, d'aluminium, ou de manganèse, notamment le sel d'aluminium de l'acide diéthylphosphinique ou le sel de zinc de l'acide diméthylphosphinique.
   - les phosphonates cycliques, tels que les esters de diphosphate cyclique tel que par exemple l'Antiblaze 1045.
   - les phosphates organiques, tels que le triphénylphosphate.
   - les phosphates inorganiques, tels que les polyphosphates d'ammonium et les polyphosphates de sodium.
   - le phosphore rouge, qu'il soit par exemple sous forme stabilisé ou revêtu, en poudre ou sous forme de masterbatches.
* les agents ignifugeants de type composés organiques azotés tels que par exemple les triazines, l'acide cyanurique et/ou isocyanurique, la mélamine ou ses dérivés comme le cyanurate de mélamine, l'oxalate, le phtalate, le borate, le sulfate, le phosphate, polyphosphate et/ou pyrophosphate de mélamine, les produits condensés de la mélamine, tel que la mélem, la mélam et le mélon, le tris(hydroxyéthyl) isocyanurate, la benzoguanamine, la guanidine, l'allantoïne, et le glycoluril.
* les agents ignifugeants contenant des dérivés halogénés, tels que :
   - les dérivés du brome tels que par exemple les PBDPO (polybromodiphényloxydes), le BrPS (polystyrène bromé et polybromostyrène), le poly(pentabromobenzylacrylate), l'indane bromé, le tétradécabromodiphénoxybenzène (Saytex 120), l'éthane-1,2-bis(pentabromophényl) ou Saytex 8010 d'Albemarle, le tétrabromobisphénol A et les oligomères époxy bromés. Notamment parmi les dérivés bromés, nous pouvons citer le polydibromostyrène tel que le PDBS-80 de Chemtura, les polystyrènes bromés tels que le Saytex HP 3010 d'Albemarle ou le FR-803P de Dead Sea Bromine Group, le décabromodiphényléther (DBPE) ou FR-1210 de Dead Sea Bromine Group, l'octabromodiphényléther (OBPE), le 2,4,6-Tris(2,4,6-tribromophénoxy)-1,3,5 triazine ou FR-245 de Dead Sea Bromine Group, le Poly(pentabromobenzylacrylate) ou FR-1025 de Dead Sea Bromine Group et les oligomères ou polymères à terminaisons époxy du tétrabromobisphénol-A comme tels que les F-2300 et F2400 de Dead Sea Bromine Group. - les composés chlorés, tel que par exemple un composé cycloaliphatique chloré comme le Dechlorane plus® (vendu par OxyChem, voir CAS 13560-89-9).

Ces composés peuvent être utilisés seuls ou en combinaison, parfois synergique. On préfère notamment une association synergique de composés contenant du phosphore comme les oxydes de phosphines, les acides phosphoniques ou leurs sels ou les acides phosphiniques ou leurs sels, et les phosphonates cycliques ; avec des dérivés azotés tels que le mélam, le mélem, le phosphate de mélamine, les polyphosphates de mélamine, les pyrophosphates de mélamine ou les polyphosphates d'ammonium.

On préfère notamment une composition selon l'invention comprenant un composé F1 de formule :

[R¹R²P(=O)-O]_{Z}⁻M^{z+}

dans laquelle :
- R¹ et R² sont identiques ou différents et représentent une chaîne alkyle linéaire ou branchée comprenant de 1 à 6 atomes de carbones, préférentiellement de 1 à 3 atomes de carbones, et/ou un radical aryle ;
- M représente un ion calcium, magnésium, aluminium et/ou zinc, préférentiellement un ion magnésium et/ou aluminium ;
- Z représente 2 ou 3, préférentiellement 3.

La composition de l'invention peut également comprendre un composé F2 qui est un produit de réaction entre l'acide phosphorique et la mélamine et/ou un produit de réaction entre l'acide phosphorique et un produit condensé de la mélamine.

La composition de l'invention peut également comprendre les composés F1 et F2.

Un tel système d'ignifugation est notamment décrit dans le brevet US 6255371.

Préférentiellement, le rapport en poids des composés F1 et F2 est respectivement compris entre 1 :1 et 4 :1, préférentiellement aux environ de 3:2.

R¹ et R² peuvent être identiques ou différents et représenter un méthyle, éthyle, n-propyl, isopropyl, n-butyl, ter-butyl, n-pentyl et/ou aryle tel qu'un phényle par exemple. M est préférentiellement un ion aluminium. L'acide phosphinique du composé F1 peut être choisi par exemple parmi le groupe constitué par l'acide diméthyl phosphinique, l'acide éthylméthyl phosphinique, l'acide diéthyl phosphinique et l'acide méthyl-n-propyl phosphinique, ou leur mélange. Différents acides phosphoniques peuvent être utilisés en combinaison.

Les sels d'acide phosphinique selon l'invention peuvent être préparés selon les méthodes usuelles bien connues de l'homme du métier, telle que par exemple celle décrite dans le brevet EP 0699708. Les sels d'acide phosphinique selon l'invention peuvent être utilisés sous différentes formes dépendantes de la nature du polymère et des propriétés désirées. Par exemple, pour obtenir une bonne dispersion dans le polymère, un sel d'acide phosphinique peut être sous forme de fines particules.

Le composé F2 est un produit de réaction entre l'acide phosphorique et la mélamine et/ou un produit de réaction entre l'acide phosphorique et un produit condensé de la mélamine. Différents composés F2 peuvent être utilisés en combinaison. Les produits condensés de la mélamine sont par exemple la mélam, la mélem et la mélom. On peut également utiliser des composés encore plus condensés. Préférentiellement, le composé F2 peut être choisi par exemple parmi le groupe constitué par les produits de réaction suivants : polyphosphate de mélamine, polyphosphate de mélam, et polyphosphate de mélem, ou leur mélange. Il est particulièrement préférable d'utiliser un polyphosphate de mélamine ayant des chaînes d'une longueur supérieure à 2, et en particulier supérieure à 10.

Ces composés sont notamment décrits dans le brevet WO 9839306. Les composés F2 peuvent être également obtenus par des procédés autres que ceux basés sur la réaction directe avec un acide phosphorique. Par exemple, le polyphosphate de mélamine peut être préparé par réaction de la mélamine avec de l'acide polyphosphorique (voir WO 9845364), mais également par condensation du phosphate de mélamine et du pyrophosphate de mélamine (voir WO 9808898).

D'une manière tout à fait préférentielle, le système d'ignifugation de la présente invention comprend un composé F1 dans lequel R¹=R²=éthyle, M=aluminium et Z=3 ; et un composé F2 : polyphosphate de mélamine. Le rapport en poids des composés F1 et F2 peut être respectivement de 3 :2.

Il est également possible d'ajouter à la formulation d'autres composés participants à l'ignifugation, tels que par exemple du borate de zinc, de l'oxyde de zinc, et de l'hydroxyde de magnésium.

D'une manière générale, la composition peut comprendre de 1 à 20 % en poids d'agents ignifugeants, par rapport au poids total de la composition, préférentiellement de 1 à 10 % en poids.

### Autres composés et additifs

Dans certains modes de réalisation, selon la propriété finale souhaitée, une composition d'alliage de résines peut en outre comprendre d'autres résines polymères, par exemple, du polyéthylène, du polystyrène, du polypropylène, de la résine ABS, du polycarbonate, du sulfure de polyphénylène, de l'oxyde de polyphénylène, du polyacétal, du polysulfone, de la polyéthersulfone, du polyétherimide, de la polyéthercétone, une résine d'acide polylactique, une résine de polysulfone, une résine élastomère ou des mélanges de ceux-ci.

La composition peut également comprendre des d'agents modifiants la résistance aux chocs. Ce sont généralement des polymères d'élastomères qui peuvent être utilisés à cet effet. Les agents modificateurs de la résilience sont généralement définis comme ayant un module de traction ASTM D-638 inférieur à environ 500 MPa. Des exemples d'élastomères convenables sont les éthylène-ester acrylique-anhydride maléïque, les ethylène-propylène-anhydride maléïque, les EPDM (ethylène-propylène-diène momonère) avec éventuellement un anhydride maléïque greffé. La concentration pondérale en élastomère est comprise entre 0,1 et 30 % par rapport au poids total de la composition.

On préfère notamment les agents modificateurs de chocs comprenant des groupements fonctionnels réactifs avec le polyamide. On peut par exemple citer les terpolymères d'éthylène, ester acrylique et glycidyl méthacrylate, les copolymères d'éthylène et de butyl ester acrylate, les copolymères d'éthylène, n-butyl acrylate et glycidyl méthacrylate, les copolymères d'éthylène et d'anhydride maléique, les copolymères styrène-maléïmides greffés avec de l'anhydride maléique, les copolymères styrène-éthylène-butylène-styrène modifié avec de l'anhydride maléique, les copolymère styrène-acrylonitrile greffés anhydrides maléiques, les copolymères acrylonitrile butadiène styrène greffés anhydrides maléiques, et leurs versions hydrogénées.

Dans un mode de réalisation, dans un cadre qui n'enfreint pas l'objectif de la présente invention, des additifs tels que des antioxydants, des stabilisants thermiques, des absorbants de rayonnement UV tels que des amines aromatiques, des phénols encombrés, du phosphore et du soufre, des agents de dispersion, des colorants, des pigments, des agents tensio-actifs, des agents de démoulage, des lubrifiants, des plastifiants, des agents d'amélioration du lustre, qui sont généralement utilisés comme agents de traitement du plastique peuvent être utilisés pour transmettre divers effets.

### Fabrication de la composition

La composition d'alliage de résines de la résine de polyamide et de la résine de polyester peut être obtenue en mélangeant à l'état fondu les composants à l'aide d'une extrudeuse traditionnelle, par exemple, une extrudeuse à vis simple ou une extrudeuse à vis double. Une plage générale pour la température du cylindre à l'intérieur de l'extrudeuse peut être réglée en tenant compte du point de fusion de la résine. Dans un mode de réalisation illustratif, lorsqu'une résine de polyamide-6 est utilisée, la température peut être réglée à 250 °C, et lorsqu'une résine de polyamide-66 est utilisée, la température peut être réglée à 280 °C.

En outre, la composition d'alliage de résines de la présente demande peut être traitée dans des formes souhaitées telles qu'une pastille, un plat, une fibre, un brin, un film, une feuille, un tuyau, un corps creux, ou une boîte par des procédés de traitement tels que le moulage par calandrage traditionnel, le moulage par compression, le moulage par soufflage, le moulage par injection, ou le moulage par fusion, mais les formes ou procédés de traitement ne sont pas limités à ceux-ci.

La composition selon la présente invention peut être utilisée selon l'utilisation générale d'une résine de polyamide ou d'une résine de polyester. Par exemple, elle peut être appliquée de diverses manières à des accessoires généraux de machinerie de précision, à des accessoires automobiles, à des accessoires électriques-électroniques, à des matériaux de construction, à des films, à des fibres, et à de l'équipement sportif.

Des exemples décrits ci-dessous servent à expliquer davantage les caractéristiques et les avantages de l'objet de la présente divulgation, mais sans qu'ils soient limités aux exemples présentés ci-dessous. L'objet de la présente divulgation ne doit pas être limité au mode de réalisation spécifique et aux exemples décrits ici. À la lumière de la présente divulgation, un homme du métier peut facilement percevoir qu'il est possible de modifier, de substituer, d'ajouter et de combiner une partie des constitutions décrites dans la présente divulgation autres que les divers modes de réalisation exemplaires et des exemples.

### PARTIE EXPERIMENTALE

Dans les exemples et les exemples comparatifs suivants, la composition d'alliage de résines de la présente invention et la composition comparative sont préparées respectivement, et leurs propriétés sont ensuite comparées, à partir desquelles les effets supérieurs de la composition d'alliage de la résine de polyamide et de la résine de polyester de la présente invention sont décrits en détail.

Initialement, chaque composant utilisé dans les exemples et les exemples comparatifs de la présente invention sont classés et expliqués ci-dessous, et ils sont indiqués avec des symboles de référence.
- Polyamide-66 thermoplastique {nom commercial : Technyl 23A, fabriqué par Rhodia}.
- Polyester : résine de téréphtalate de polyéthylène {nom commercial : ESLON PET-2211, fabriqué par Woongjin Chemical}.
- Phosphore rouge : mélange maitre FR4260
- Fibres de verre
- Résine époxy de type DGEBA {poids équivalent d'époxy : 3000 g/éq}, fabriqué par Kukdo Chemical, Co., Ltd.
- Agent modificateur de la résistance aux chocs : Lotader 3210

Les composants choisis ci-dessus sont mélangés uniformément dans un super mélangeur selon chaque rapport de mélange des exemples et des exemples comparatifs. Une extrudeuse à double vis (diamètre interne de 30 mm, L/D = 30) est utilisée. Les températures du cylindre à l'intérieur de l'extrudeuse sont réglées à environ 280 °C, en tenant compte du point de fusion de la résine utilisée, et le gaz à l'intérieur des vis est épuisé sous une vitesse de rotation des vis de 250 à 300 tr/min et une pression de pompe à vide de 50 à 70 cm de Hg. Les composants sont parfaitement mélangés à l'intérieur du cylindre de l'extrudeuse et l'extrudat formé est trempé dans un bain d'eau froide et mis en pastille à une taille prescrite en utilisant une pastilleuse.

Une machine à injection (German, ENGEL) ayant une force de fermeture de 80 tonnes et un volume d'injection de 189,44 cc (6,4 oz) est utilisée pour préparer l'échantillon pour divers tests de propriétés. Après la préparation de l'échantillon de la composition par moulage dans des conditions d'une température de moulage de la plage générale en tenant compte du point de fusion de la résine utilisée, une température de moulage de 80 °C, une pression d'injection de 50 à 80 bar, une vitesse d'injection de 40 à 60 mm/sec, une durée d'injection de trois secondes et une durée de refroidissement de quinze secondes.

Les propriétés globales sont reportées au Tableau 1 suivant :

**Tableau 1**

| Composant (% en poids) | Exemple comparatif 1 | Exemple 1* | Exemple 2 |
|---|---|---|---|
| Polyamide | 47,7 | 48,2 | 45,2 |
| Polyester | 20,0 | 20,0 | 20,0 |
| Fibres de verre | 25,0 | 25,0 | 25,0 |
| Agent ignifugeant | 6,6 | 6,6 | 6,6 |
| Résine epoxy | 0,5 | - | - |
| Modificateur d'impact | - | - | 3,0 |
| | | | |
| Résistance à la traction ASTM D-638 (kgf/cm²) | 1671 | 1656 | 1579 |
| Elongation à la rupture ASTM D-638 (%) | 2,9 | 2,5 | 2,7 |
| Module de rupture | 2397 | 2266 | 2162 |
| Module en flexion ASTMD790 (kgf/cm²) | 82990 | 84250 | 79940 |
| IZOD impact ASTMD256 (kgf/cm/cm) | 7,25 | 6,9 | 6, 96 |
| GWIT, 775°C, 2 mm | Echoue | Passe | Passe |
| UL 94 0,8 mm | V-1 | V-1 | V-0 |
| CTI IEC 112(V) | | | 600 |

| | | | |
|---|---|---|---|
| * Example pas selon l'invention revendiquée | | | |

Dans le test du GWIT, on mesure la capacité à ne pas former une flamme suite à l'application d'un fil incandescent selon la norme IEC 60695-2-13 sur des éprouvettes d'épaisseur de 1,0 mm, à une température de 750°C. La norme prévoit que lorsque l'échantillon passe avec succès le test à 750°C, est additionné 25°C à cette température, et l'échantillon est par conséquent classifié avec un GWIT de 775°C. On note que la composition passe avec succès le test lorsqu'il n'y a pas d'inflammation durant l'application du fil incandescent. On note que la composition échoue au test lorsqu'il y a inflammation durant l'application du fil incandescent, c'est à dire production de flammes ayant une permanence de plus de 5 secondes. Le test est passé avec succès lorsque les trois éprouvettes différentes confirment successivement la même température.

Un autre exemple comparatif a été effectuée similaire à l'exemple 1 mais sans agent ignifugeant ni fibres de verre. Il n'est pas possible d'obtenir un jonc extrudé tant le polyamide et le polyester sont incompatibles. Aucun granulé n'a pu être obtenu.

On observe ainsi que l'absence d'un agent compatibilisant entre le polyamide et le polyester, tel que la résine epoxy, on obtient de meilleurs propriétés d'ignifugation, notamment le GWIT par rapport à une composition connue de l'art antérieur, tout en maintenant remarquablement les propriétés mécaniques ; et ceci en utilisant une quantité relativement faible d'agents ignifugeants dans la formulation.

Une composition similaire à l'exemple 1 mais comprenant un autre système d'ignifugation, à savoir un composé F1 dans lequel R¹=R²=éthyle, M=aluminium et Z=3 ; et un composé F2 : polyphosphate de mélamine (le rapport en poids des composés F1 et F2 est respectivement de 3 :2) a été produites et testées. On observe des propriétés mécaniques équivalentes voir supérieures à la composition de l'exemple 1 tout en présentant une classe V0 au test UL94 @ 0,8mm et qui passe au test GWIT, 775°C, 2 mm.

## Revendications

1. Composition comprenant au moins :
(a) de 40 à 70 % en poids par rapport au poids total de la composition d'une résine de polyamide thermoplastique ;
(b) de 5 à 40 % en poids par rapport au poids total de la composition d'une résine de polyester thermoplastique ;
(c) de 15 à 50 % en poids par rapport au poids total de la composition d'une charge de renfort ou de remplissage ; et
(d) de 1 à 20 % en poids par rapport au poids total de la composition d'un agent ignifugeant,
(e) de 0,1 à 30 % en poids par rapport au poids total de la composition d'un agent modificant la resistance aux chocs, la composition ne comprenant pas un agent compatibilisant du polyamide et du polyester.

2. Composition selon la revendication 1, **caractérisée en ce que** ladite résine de polyamide comprend un ou plusieurs éléments choisis dans le groupe constitué du polyamide-6, du polyamide-66, du polyamide-610, du polyamide-11, du polyamide-12, le polytéréphtalamide, le polyisophtalamide, et les polyaramides.

3. Composition selon la revendication 1 ou 2, **caractérisée en ce que** ladite résine de polyester comprend un ou plusieurs éléments choisis dans le groupe constitué du téréphtalate de polybutylène, du polybutylène(téréphtalate/isophtalate), du polybutylène(téréphtalate/adipate), du polybutylène (téréphtalate/sébacate), du polybutylène (téréphtalate/décanedicarboxylate), du naphtalate de polybutylène, du téréphtalate de polyéthylène, du polyéthylène(téréphtalate/isophtalate), du polyéthylène(téréphtalate/adipate), du polyéthylène (téréphtalate/5-sodiumsulfoisophtalate), du polybutylène (téréphtalate/5-sodiumsulfoisophtalate), du téréphtalate de polypropylène, du naphtalate de polyéthylène et du téréphtalate de polycyclohexanediméthylène.

4. Composition selon l'une quelconque des revendications 1 à 3, **caractérisée en ce que** ladite résine de polyester est une résine recyclée.

5. Composition selon l'une quelconque des revendications 1 à 4, **caractérisée en ce que** les charges de renfort ou de remplissage sont des charges fibreuses ou non fibreuses.

6. Composition selon l'une quelconque des revendications 1 à 5, **caractérisée en ce que** les charges fibreuses sont choisies dans le groupe constitué par : les fibres de verre, les fibres de carbone, les fibres naturelles, les fibres d'aramides, et les nanotubes.

7. Composition selon l'une quelconque des revendications 1 à 7, **caractérisée en ce qu'**elle comprend au moins un agent ignifugeant choisi dans le groupe constitué par :
* les agents ignifugeants contenant du phosphore, tels que :
- les oxydes de phosphines
- les acides phosphoniques ou leurs sels ou les acides phosphiniques ou leurs sels
- les phosphonates cycliques
- les phosphates organiques
- les phosphates inorganiques
- le phosphore rouge
* les agents ignifugeants de type composés organiques azotés tels que par exemple les triazines, l'acide cyanurique et/ou isocyanurique, la mélamine ou ses dérivés comme le cyanurate de mélamine, l'oxalate, le phtalate, le borate, le sulfate, le phosphate, polyphosphate et/ou pyrophosphate de mélamine, les produits condensés de la mélamine, tel que la mélem, la mélam et le mélon, le tris(hydroxyéthyl)isocyanurate, la benzoguanamine, la guanidine, l'allantoïne, et le glycoluril
* les agents ignifugeants contenant des dérivés halogénés, tels que :
- les dérivés du brome, et
- les composés chlorés.

8. Composition selon l'une quelconque des revendications 1 à 8, **caractérisée en ce qu'**elle comprend comme agent ignifugeant une combinaison contenant :
- des composés contenant du phosphore comme les oxydes de phosphines, les acides phosphoniques ou leurs sels ou les acides phosphiniques ou leurs sels, et les phosphonates cycliques ;
- avec des dérivés azotés tels que le mélam, le mélem, le phosphate de mélamine, les polyphosphates de mélamine, les pyrophosphates de mélamine ou les polyphosphates d'ammonium.

## Patentansprüche

1. Zusammensetzung, umfassend wenigstens:
(a) von 40 bis 70 Gewichts-% bezogen auf das Gesamtgewicht der Zusammensetzung eines thermoplastischen Polyamidharzes;
(b) von 5 bis 40 Gewichts-% bezogen auf das Gesamtgewicht der Zusammensetzung eines thermoplastischen Polyesterharzes;
(c) von 15 bis 50 Gewichts-% bezogen auf das Gesamtgewicht der Zusammensetzung eines verstärkenden oder füllenden Zusatzstoffes; und
(d) von 1 bis 20 Gewichts-% bezogen auf das Gesamtgewicht der Zusammensetzung eines flammhemmenden Mittels,
(e) von 0,1 bis 30 Gewichts-% bezogen auf das Gesamtgewicht der Zusammensetzung eines Mittels, welches die Stoßfestigkeit verändert, wobei die Zusammensetzung kein Mittel zur Kompatibilisierung von Polyamid und Polyester umfasst.

2. Zusammensetzung nach Anspruch 1, **dadurch gekennzeichnet, dass** das Polyamidharz ein oder mehrere Elemente umfasst, die aus der Gruppe ausgewählt sind, die aus Polyamid-6, Polyamid-66, Polyamid-610, Polyamid-11, Polyamid-12, Polyterephthalamid, Polyisophthalamid und Polyaramiden besteht.

3. Zusammensetzung nach Anspruch 1 oder 2, **dadurch gekennzeichnet, dass** das Polyesterharz ein oder mehrere Elemente umfasst, die aus der Gruppe ausgewählt sind, die aus Polybutylenterephthalat, Polybutylen(terephthalat/isophthalat), Polybutylen(terephtalat/adipat), Polybutylen(terephthalat/sebacat), Polybutylen(terephthalat/decandicarboxylat), Polybutylennaphthalat, Polyethylenterephthalat, Polyethylen(terephthalat/isophthalat), Polyethylen(terephthalat/adipat), Polyethylen(terephthalat/5-natriumsulfoisophthalat), Polybutylen(terephthalat/5-natriumsulfoisophthalat), Polypropylenterephthalat, Polyethylennaphthalat und Polycyclohexandimethylenterephthalat besteht.

4. Zusammensetzung nach einem der Ansprüche 1 bis 3, **dadurch gekennzeichnet, dass** das Polyesterharz ein recyceltes Harz ist.

5. Zusammensetzung nach einem der Ansprüche 1 bis 4, **dadurch gekennzeichnet, dass** die verstärkenden oder füllenden Zusatzstoffe faserige oder nicht faserige Zusatzstoffe sind.

6. Zusammensetzung nach einem der Ansprüche 1 bis 5, **dadurch gekennzeichnet, dass** die faserigen Zusatzstoffe aus der Gruppe ausgewählt sind, bestehend aus: Glasfasern, Kohlenstofffasern, natürlichen Fasern, Aramidfasern und Nanoröhren.

7. Zusammensetzung nach einem der Ansprüche 1 bis 6, **dadurch gekennzeichnet, dass** sie wenigstens ein flammhemmendes Mittel umfasst, das aus der Gruppe ausgewählt ist, bestehend aus:
* flammhemmenden Mitteln, die Phosphor enthalten, wie z.B.
- Phosphinoxide
- Phosphonsäuren oder ihre Salze oder Phosphinsäuren oder ihre Salze
- cyclische Phosphonate
- organische Phosphate
- anorganische Phosphate
- roter Phosphor
* flammhemmenden Mitteln vom Typ stickstoffhaltige organische Verbindungen wie zum Beispiel Triazine, Cyanur- und/oder Isocyanursäure, Melamin oder seine Derivate wie Melamincyanurat, Melaminoxalat, -phthalat, -borat, -sulfat, -phosphat, -polyphosphat und/oder -pyrophosphat, kondensierte Melaminprodukte wie z.B. Melem, Melam und Melon, Tris(hydroxyethyl)isocyanurat, Benzoguanamin, Guanidin, Allantoin und Glycoluril
* flammhemmenden Mitteln, die Halogenderivate enthalten, wie z.B.
- Bromderivate, und
- chlorhaltige Verbindungen.

8. Zusammensetzung nach einem der Ansprüche 1 bis 7, **dadurch gekennzeichnet, dass** sie als flammhemmendes Mittel eine Kombination umfasst, die enthält:
- Verbindungen, die Phosphor enthalten, wie Phospinoxide, Phosphonsäuren oder ihre Salze oder Phosphinsäuren oder ihre Salze, und cyclische Phosphonate;
- mit stichstoffhaltigen Derivaten wie z.B. Melam, Melem, Melaminphosphat, Melaminpolyphosphaten, Melaminpyrophosphaten oder Ammoniumpolyphosphaten.

## Claims

1. Composition comprising at least:
(a) from 40% to 70% by weight relative to the total weight of the composition of a thermoplastic polyamide resin;
(b) from 5% to 40% by weight relative to the total weight of the composition of a thermoplastic polyester resin;
(c) from 15% to 50% by weight relative to the total weight of the composition of a reinforcing or bulking filler;
(d) from 1% to 20% by weight relative to the total weight of the composition of a fire retardant, and
(e) from 0.1% to 30% by weight relative to the total weight of the composition of an impact modifier the composition not comprising any compatibilizer for the polyamide and the polyester.

2. Composition according to Claim 1, **characterized in that** said polyamide resin comprises one or more elements chosen from the group consisting of polyamide-6, polyamide-66, polyamide-610, polyamide-11, polyamide-12, polyterephthalamide, polyisophthalamide and polyaramids.

3. Composition according to Claim 1 or 2, **characterized in that** said polyester resin comprises one or more elements chosen from the group consisting of polybutylene terephthalate, polybutylene (terephthalate/isophthalate), polybutylene (terephthalate/adipate), polybutylene (terephthalate/sebacate), polybutylene (terephthalate/decanedicarboxylate), polybutylene naphthalate, polyethylene terephthalate, polyethylene (terephthalate/isophthalate), polyethylene (terephthalate/adipate), polyethylene (terephthalate/5-sodiumsulfoisophthalate), polybutylene (terephthalate/5-sodiumsulfoisophthalate), polypropylene terephthalate, polyethylene naphthalate, polycyclohexanedimethylene terephthalate.

4. Composition according to any one of Claims 1 to 3, **characterized in that** said polyester resin is a recycled resin.

5. Composition according to any one of Claims 1 to 4, **characterized in that** the reinforcing or bulking fillers are fibrous or non-fibrous fillers.

6. Composition according to any one of Claims 1 to 5, **characterized in that** the fibrous fillers are chosen from the group consisting of: glass fibers, carbon fibers, natural fibers, aramid fibers and nanotubes.

7. Composition according to any one of Claims 1 to 6, **characterized in that** it comprises at least one fire retardant chosen from the group consisting of:
* phosphorus-bearing fire retardants, such as:
- phosphine oxides
- phosphonic acids or salts thereof or phosphinic acids or salts thereof
- cyclic phosphonates
- organic phosphates
- inorganic phosphates
- red phosphorus
* fire retardants of organonitrogen compound type, for instance triazines, cyanuric acid and/or isocyanuric acid, melamine or derivatives thereof, such as melamine cyanurate, melamine oxalate, phthalate, borate, sulfate, phosphate, polyphosphate and/or pyrophosphate, condensed melamine products, such as melem, melam and melon, tri(hydroxyethyl) isocyanurate, benzoguanamine, guanidine, allantoin and glycoluril.
* fire retardants containing halogenated derivatives, such as:
- bromine derivatives, and
- chlorinated compounds.

8. Composition according to any one of Claims 1 to 7, **characterized in that** it comprises as fire retardant a combination containing:
- phosphorus-bearing compounds, such as phosphine oxides, phosphonic acids or salts thereof or phosphinic acids or salts thereof, and cyclic phosphonates;
- with nitrogenous derivatives such as melam, melem, melamine phosphate, melamine polyphosphates, melamine pyrophosphates or ammonium polyphosphates.
